# EUROPEAN PATENT APPLICATION

(11) **EP 3 572 167 A1**
(43) Date of publication of application: **27.11.2019**
(21) Application number: 19170911.2
(22) Date of filing: 24.04.2019
(51) Int. Cl.: B22F 3/105, B33Y 10/00, B33Y 70/00, B33Y 80/00

(54) **MICROALLOYED STEEL COMPONENT AND MANUFACTURING METHOD THEREFOR**

(30) Priority: 21.05.2018 JP 2018096987
(71) Applicant: Tohoku University, Aoba-ku Sendai-shi Miyagi 980-8577 (JP); TOYOTA JIDOSHA KABUSHIKI KAISHA, Toyota-shi, Aichi-ken 471 8571 (JP)
(72) Inventor: CHIBA, Akihiko, Miyagi-ken, 980-8577 (JP); AOYAGI, Kenta, Miyagi-ken, 980-8577 (JP); MAEDA, Chikatoshi, Aichi-ken, 471-8571 (JP); MOURI, Toshihiro, Aichi-ken, 471-8571 (JP)
(74) Representative: J A Kemp LLP

(57) **Abstract**

A microalloyed steel component according to an aspect of the present disclosure includes a structure composed of ferrite and pearlite. The microalloyed steel component includes a columnar structure including band-shaped pearlite layers extending in a longitudinal direction of the microalloyed steel component and having a width of 200 µm or shorter, and a ferrite layer precipitated so as to extend in the longitudinal direction between the pearlite layers.

## Description

### BACKGROUND

The present disclosure relates to a microalloyed steel component and a method for manufacturing the microalloyed steel component.

As disclosed in Japanese Unexamined Patent Application Publication No. 2007-211314, microalloyed steel components for which hardening and tempering processes are unnecessary have been widely used as steel components for automobiles and the like. In general, such steel components made of microalloyed steel (hereinafter referred to as microalloyed steel components) are left to cool after being formed by hot forging or the like, so that they have an isotropic structure composed of ferrite/pearlite.

Incidentally, an additive manufacturing method has been recently attracting attention. In a powder-bed-fusion type additive manufacturing method, a metal component having a three-dimensional (3D) shape is fabricated in a layer-by-layer manner by selectively melting and solidifying a predetermined area in a metal powder layer by scanning laser or the like. In the additive manufacturing, the process to form the metal powder layers and the process to selectively melt and solidify the powder layer are repeated. By using the additive manufacturing method, it is also possible to manufacture a steel component which is designed so as to have a complicated shape by, for example, topology optimization for a weight reduction.

### SUMMARY

If it is possible to control a structure of a microalloyed steel component so as to have a fine columnar structure composed of ferrite/pearlite extending in a predetermined direction, it could be possible to achieve excellent mechanical properties (such as a tensile strength and an elongation). However, as described above, microalloyed steel components manufactured by the conventional technique have isotropic structures. That is, a microalloyed steel component having a fine columnar structure extending in a predetermined direction has not been realized yet. Note that although a columnar structure can be obtained by a unidirectional solidification method, it cannot provide a fine columnar structure.

The present inventors have focused on an additive manufacturing method, and diligently and repeatedly studied how to obtain a fine columnar structure composed of ferrite/pearlite extending in a predetermined direction. As a result, the present inventors have found the following problem.

When a steel component made of microalloyed steel is shaped by using a selective laser melting method, a cooling rate (i.e., a cooling speed) is high. Therefore, the obtained structure becomes a martensitic structure, rather than becoming a ferrite/pearlite structure, and cracking is likely to occur. That is, in the selective laser melting method, a fine columnar structure composed of ferrite/pearlite extending in a predetermined direction was not obtained.

The present disclosure has been made in view of the above-described circumstances and an object thereof is to provide a microalloyed steel component having a fine columnar structure composed of ferrite and pearlite extending in a predetermined direction, and thereby having excellent mechanical properties, and provide a method for manufacturing such microalloyed steel components.

A first exemplary aspect is a microalloyed steel component including a structure composed of ferrite and pearlite, the microalloyed steel component including a columnar structure including:
band-shaped pearlite layers extending in a longitudinal direction of the microalloyed steel component and having a width of 200 µm or shorter; and
a ferrite layer precipitated so as to extend in the longitudinal direction between the pearlite layers.

Since the microalloyed steel component according to an aspect of the present disclosure includes a fine columnar structure including: band-shaped pearlite layers extending in the longitudinal direction of the microalloyed steel component and having a width of 200 µm or shorter; and a ferrite layer precipitated between the pearlite layers, it has excellent mechanical properties.

The microalloyed steel component may be topologically optimized. A weight can be reduced by the topology optimization. Further, a thin-walled part formed by the topology optimization has a finer columnar structure and hence mechanical properties are further improved.

Another exemplary aspect is a microalloyed steel component manufacturing method for shaping a microalloyed steel component having a three-dimensional (3D) shape, including:
spreading a microalloyed steel powder in a layered state;
preheating the microalloyed steel powder spread in the layered state by applying an electron beam to the microalloyed steel powder; and
forming a metal layer by applying an electron beam to a predetermined area of the preheated microalloyed steel powder, and thereby melting and solidifying the microalloyed steel powder in the predetermined area; and
repeating the spreading, the preheating, and the forming, and thereby successively laminating metal layers, in which
a shaping direction is in parallel with a longitudinal direction of the microalloyed steel component, and the microalloyed steel powder is heated to a temperature higher than an austenite transformation completion temperature A3 in the preheating, and
after the shaping of the microalloyed steel component is completed, the microalloyed steel component is cooled from the temperature higher than the austenite transformation completion temperature A3 at a predetermined cooling rate.

In the microalloyed steel component manufacturing method according to an aspect of the present disclosure, the shaping direction is in parallel with the longitudinal direction of the microalloyed steel component, and the microalloyed steel powder is heated to a temperature higher than the austenite transformation completion temperature A3 in the preheating. Therefore, it is possible to obtain a fine columnar structure composed of austenite extending in the shaping direction, i.e., in the longitudinal direction while maintaining an austenite single phase. Further, after the shaping of the microalloyed steel component is completed, the microalloyed steel component is cooled from the temperature higher than the austenite transformation completion temperature A3 at a predetermined cooling rate. Therefore, ferrite is precipitated in crystalline grain boundaries of fine columnar austenite formed during the shaping. Further, pearlite is precipitated so as to fill gaps of the precipitated ferrite. As a result, a microalloyed steel component having a fine columnar structure composed of ferrite/pearlite extending in the longitudinal direction, and thereby having excellent mechanical properties is obtained.

The microalloyed steel component may be topologically optimized. A weight can be reduced by the topology optimization. Further, a thin-walled part formed by the topology optimization has a finer columnar structure and hence mechanical properties are further improved.

According to the present disclosure, it is possible to provide a microalloyed steel component having a fine columnar structure composed of ferrite and pearlite extending in a predetermined direction, and thereby having excellent mechanical properties, and provide a method for manufacturing such microalloyed steel components.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a schematic cross section showing an electron beam shaping apparatus used in a method for manufacturing a microalloyed steel component according to a first embodiment;
Fig. 2 is a flowchart showing a method for manufacturing a microalloyed steel component according to a first embodiment;
Fig. 3 is a plan view of a connecting rod for an automobile, which is an example of a microalloyed steel component according to a first embodiment;
Fig. 4 is a temperature chart of a temperature directly under a pedestal 21, i.e., a temperature of a powder bed during shaping;
Fig. 5 show photographs of microstructures of microalloyed steel components according to examples;
Fig. 6 is a schematic cross section showing relations between shaping directions of samples A, B and C, and longitudinal directions thereof;
Fig. 7 is a graph showing stress-strain curves in tensile tests of the samples A, B and C, and an SLM sample for comparisons thereof; and
Fig. 8 is a graph showing fatigue characteristics (S-N curves) of the samples A, B and C for comparisons thereof.

### DESCRIPTION OF EMBODIMENTS

Specific embodiments to which the present disclosure is applied will be described hereinafter in detail with reference to the drawings. However, the present disclosure is not limited to the below-shown embodiments. Further, the following descriptions and drawings are simplified as appropriate for clarifying the explanation.

### (First Embodiment)

### <Manufacturing Apparatus for Microalloyed Steel Component>

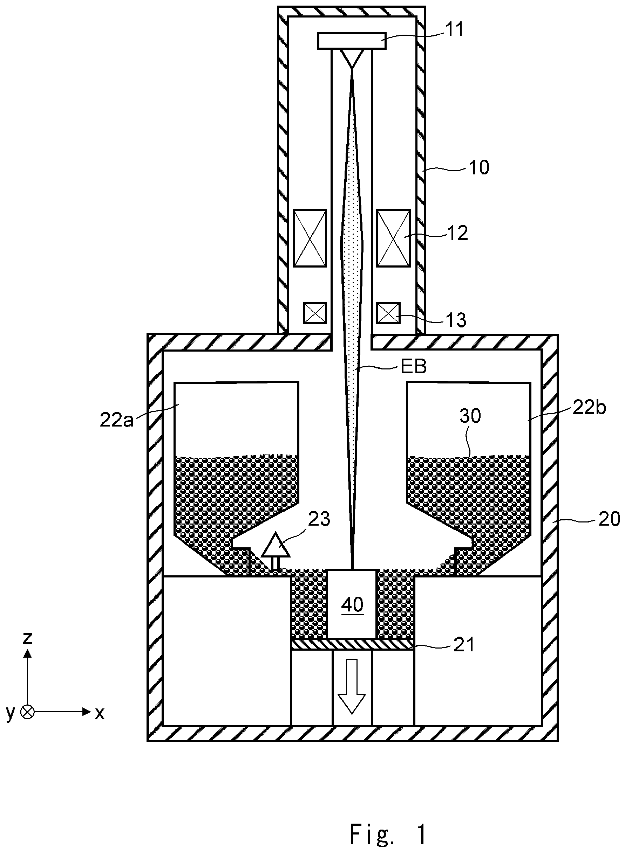

Firstly, a manufacturing apparatus used for a method for manufacturing a microalloyed steel component according to a first embodiment is described with reference to Fig. 1. Fig. 1 is a schematic cross section showing an electron beam shaping apparatus used in the method for manufacturing a microalloyed steel component according to the first embodiment.

Note that the microalloyed steel component in this specification means a steel component having the same composition as that of microalloyed steel. That is, whether a steel component is regarded as a microalloyed steel component or not is determined based solely on its composition. That is, its history of thermal processes and other factors are not taken into consideration.

Further, needless to say, right-handed xyz orthogonal coordinate systems shown in Fig. 1 and other drawings are shown for the sake of convenience to explain positional relations among components. In general, a z-axis positive direction is a vertically upward direction and an xy-plane is a horizontal plane.

As shown in Fig. 1, the electron beam shaping apparatus includes a cylindrical electron beam gun chamber 10 extending in the z-axis direction, and a box-like shaping chamber 20 disposed below the electron beam gun chamber 10 (i.e., on the z-axis negative direction side of the electron beam gun chamber 10). The electron beam gun chamber 10 and the shaping chamber 20 are evacuated by a vacuum exhausting apparatus (not shown).

As shown in Fig. 1, an electron beam gun 11, a focus coil 12, and a deflection coil 13 are housed in the electron beam gun chamber 10. The electron beam gun 11 is disposed above the electron beam gun chamber 10, and an electron beam EB is emitted from the electron beam gun 11 in a downward direction (i.e., in the z-axis negative direction).

The focus coil 12 and the deflection coil 13 are arranged so as to surround the electron beam EB. The electron beam EB emitted from the electron beam gun 11 passes through the focal coil 12, then passes through the deflection coil 13, and is guided into the shaping chamber 20. The electron beam EB is scanned (i.e., is moved left and right, and/or up and down) by adjusting the focus of the electron beam EB by using the focal coil 12 and deflecting the electron beam EB by using the deflection coil 13.

As shown in Fig. 1, a pedestal 21, hoppers 22a and 22b, and a rake 23 are housed in the shaping chamber 20.

The pedestal 21 is a plate-like component having a rectangular shape on a plan view, and is disposed in a central part of the electron beam gun chamber 10. Further, the pedestal 21 can be moved in the vertical direction. The pedestal 21 is called a start plate, a platform, or the like.

The hoppers 22a and 22b are disposed above both sides of the pedestal 21 in the x-axis direction.

The rake 23 is a rod-like component extending in the y-axis direction on the pedestal 21 and can be moved in the x-axis direction. The rake 23 is also called a squeegee or the like.

A microalloyed steel powder 30, which is a raw material, is housed in the hopper 22a and 22b.

By moving the rake 23 in the x-axis positive direction, the microalloyed steel powder 30 supplied through a lower opening of the hopper 22a is spread in a layered state on the pedestal 21. After applying the electron beam EB to the spread microalloyed steel powder 30, i.e., the powder bed and thereby preheating it to a predetermined temperature, a metal layer is formed by selectively applying an electron beam EB to a predetermined area(s) of the spread microalloyed steel powder 30, and thereby melting and solidifying the microalloyed steel powder 30 in the predetermined area(s). The thickness of the spread microalloyed steel powder 30 (hereinafter also referred to as the lamination thickness) is, for example, 50 to 80 µm.

Similarly, by moving the rake 23 in the x-axis negative direction, the microalloyed steel powder 30 supplied through a lower opening of the hopper 22b is spread in a layered state on the pedestal 21. After applying the electron beam EB to the spread microalloyed steel powder 30 and thereby preheating it to a predetermined temperature, a metal layer is formed by selectively applying an electron beam EB to a predetermined area(s) of the spread microalloyed steel powder 30, and thereby melting and solidifying the microalloyed steel powder 30 in the predetermined area(s).

Specifically, a metal layer is formed by moving the rake 23 in the x-axis positive direction and thereby spreading the microalloyed steel powder 30 supplied from the hopper 22a. Then, the pedestal 21 is lowered. The distance by which the pedestal 21 is lowered is equal to the laminate thickness. Then, a metal layer is formed by moving the rake 23 in the x-axis negative direction and thereby spreading the microalloyed steel powder 30 supplied from the hopper 22b. Then, the pedestal 21 is lowered. As described above, the microalloyed steel powder 30 is repeatedly supplied from the hoppers 22a and 22b in an alternate manner. Therefore, every time the rake 23 is moved, the microalloyed steel powder 30 can be spread on the pedestal 21, thus enabling excellent production efficiency.

As described above, in the electron beam shaping apparatus shown in Fig. 1, every time a metal layer is formed by irradiating the spread microalloyed steel powder 30 with the electron beam EB, the pedestal 21 is lowered. By doing so, new metal layers are successively laminated. By the above-described configuration, a microalloyed steel component 40 can be formed on the pedestal 21.

### <Method for Manufacturing Microalloyed Steel Component>

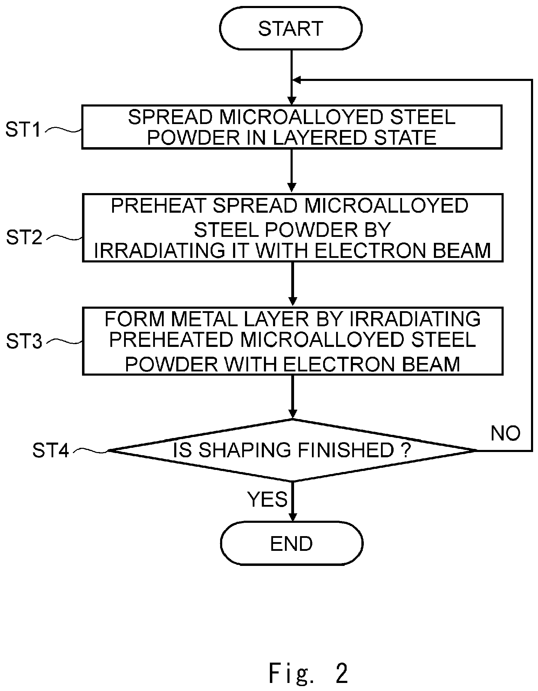

Next, a method for manufacturing a microalloyed steel component according to the first embodiment is described with reference to Fig. 2. Fig. 2 is a flow chart showing a method for manufacturing a microalloyed steel component according to the first embodiment. In the following explanation related to Fig. 2, Fig. 1 is also referred to as appropriate.

As shown in Fig. 2, firstly, a microalloyed steel powder 30 supplied from the lower opening of the hopper 22a or 22b is spread in a layered state on the pedestal 21 (step ST1). Note that when the microalloyed steel powder 30 is spread on the pedestal 21 for the first time, the pedestal 21 may be preheated to a predetermined temperature by irradiating the pedestal 21 with an electron beam EB before the step ST1.

Next, the spread microalloyed steel powder 30 is preheated by applying an electron beam EB to it (step ST2). Note that the microalloyed steel powder 30 is heated to a temperature higher than an austenite transformation completion temperature A3. Specifically, the microalloyed steel powder 30 is heated to, for example, about 800°C.

Next, a metal layer is formed by applying an electron beam EB to a predetermined area(s) of the preheated microalloyed steel powder 30, and thereby melting and solidifying the microalloyed steel powder 30 in the predetermined area(s) (step ST3).

Then, when the shaping has not been completed yet (No at step ST4), the pedestal 21 is lowered by a distance equivalent to the lamination thickness and the steps ST1 to ST3 are repeated. Then, when the shaping has been completed (Yes at step ST4), the shaping is finished. That is, the steps ST1 to ST3 are repeated until the shaping is completed. In this way, metal layers are successively laminated and a microalloyed steel component 40 having a three-dimensional (3D) shape is thereby shaped. Then, after completing the shaping of the microalloyed steel component 40, this microalloyed steel component 40 is cooled from the temperature higher than the austenite transformation completion temperature A3 at a predetermined cooling rate.

Note that in the method for manufacturing a microalloyed steel component according to the first embodiment, the shaping direction is in parallel with the longitudinal direction of the microalloyed steel component 40. Note that, needless to say, a certain degree of a deviation between the longitudinal direction of the microalloyed steel component 40 and the shaping direction is allowed.

In the method for manufacturing a microalloyed steel component according to the first embodiment, in the step ST2 in which the microalloyed steel powder 30 is preheated, the microalloyed steel powder 30 is heated to a temperature higher than the austenite transformation completion temperature A3. Therefore, it is possible to obtain a fine columnar structure composed of austenite extending in the shaping direction, i.e., in the longitudinal direction while maintaining an austenite single phase. Further, after the shaping of the microalloyed steel component 40 is completed, the microalloyed steel component 40 is cooled from the temperature higher than the austenite transformation completion temperature A3 at a predetermined cooling rate. Therefore, ferrite is precipitated in crystalline grain boundaries of fine-columnar austenite formed during the shaping. Further, pearlite is precipitated so as to fill gaps of the precipitated ferrite. As a result, a fine columnar structure composed of ferrite/pearlite extending in the longitudinal direction can be obtained.

### <Microalloyed Steel Component>

The microalloyed steel component according to the first embodiment has a columnar structure composed of band-shaped pearlite layers extending in the shaping direction and having a width of 200 µm or shorter, and ferrite layers precipitated between the pearlite layers. Note that the shaping direction is in parallel with the longitudinal direction of the microalloyed steel component. As described above, the microalloyed steel component according to the first embodiment has a fine columnar structure composed of ferrite and pearlite extending in the longitudinal direction of the microalloyed steel component. Therefore, the microalloyed steel component has excellent mechanical properties such as a tensile strength, an elongation, and a fatigue characteristic. Details of the structure of the microalloyed steel component according to the first embodiment will be described later when examples are described.

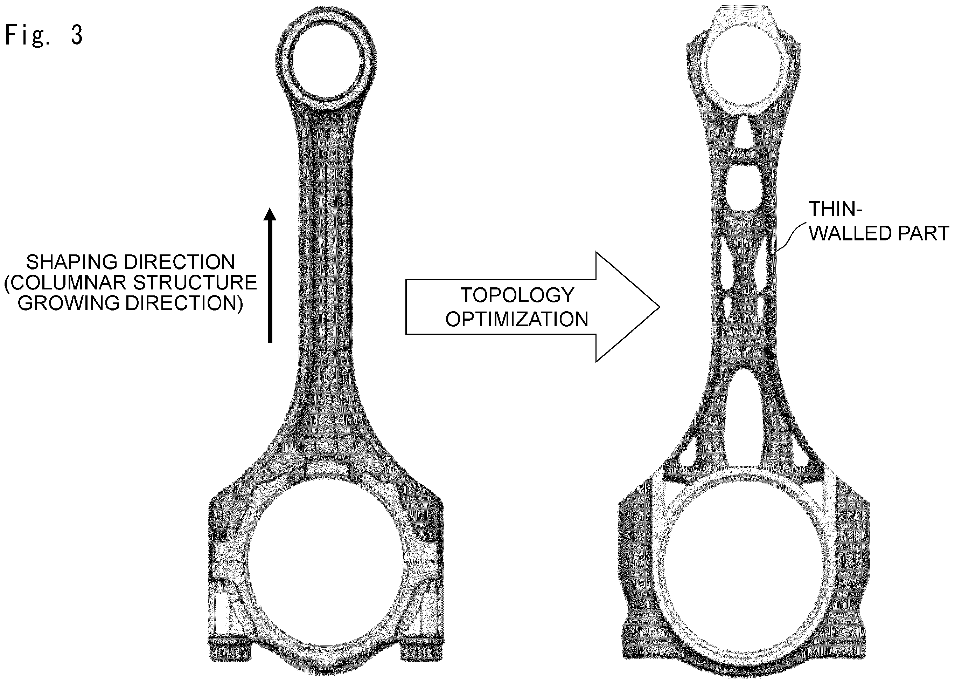

The microalloyed steel component according to the first embodiment is, for example, a connecting rod, a piston, a camshaft, or the like used in an automobile, though it is not limited to such components. These microalloyed steel components may be designed so as to have complicated shapes by, for example, topology optimization for weight reductions. Note that Fig. 3 is a plan view of a connecting rod for an automobile, which is an example of the microalloyed steel component according to the first embodiment. Fig. 3 shows shapes before and after topology optimization.

As shown in Fig. 3, it is possible to shape even the complicated shape after the topology optimization by using the method for manufacturing a microalloyed steel component according to the first embodiment. As shown in Fig. 3, a thin-walled part is formed in the microalloyed steel component after the topology optimization. In the thin-walled part, a cooling rate increases and hence it is possible to make the columnar structure finer. Since the connecting rod shown in Fig. 3 has a fine columnar structure composed of ferrite and pearlite both of which extend in the longitudinal direction, it has excellent mechanical properties such as a tensile strength, an elongation and a fatigue characteristic.

### [Example]

The microalloyed steel component and the method for manufacturing a microalloyed steel component according to the first embodiment are described hereinafter in detail by using comparative examples and examples. However, the microalloyed steel component and the method for manufacturing the same according to the first embodiment are not limited to the following examples.

### <Structure Observation Test>

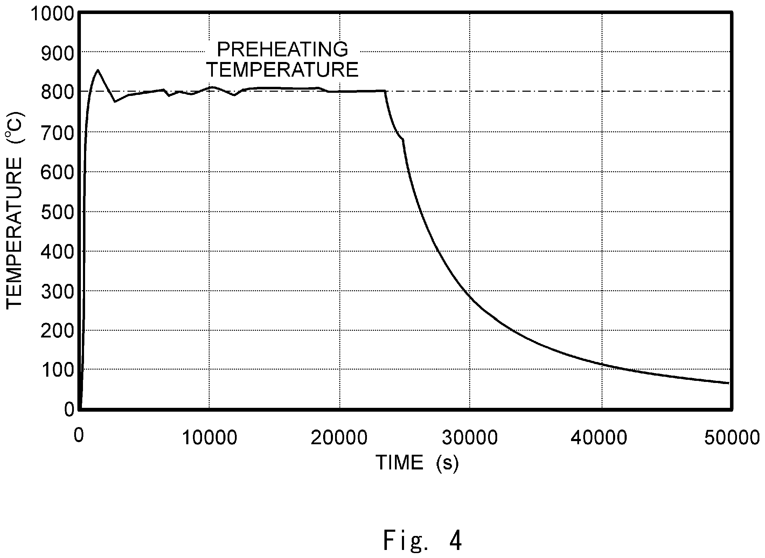

As the microalloyed steel powder 30, one having constituents equivalent to those of a commercially-available microalloyed steel having a composition of Fe-0.45C-0.3Si-0.7Mn-0.003S-0.15Cr-0.1V, and a particle size (or a particle diameter) of 45 to 150 µm was used. As the electron beam shaping apparatus, an electron beam shaping apparatus A2X manufactured by Arcam EBM was used. The laminate thickness was 70 µm and the preheating temperature was about 800°C. Fig. 4 is a temperature chart of a temperature directly under the pedestal 21, i.e., a temperature of the powder bed during the shaping. A horizontal axis represents time and a vertical axis represents temperatures. As shown in Fig. 4, the preheating temperature was maintained at about 800°C. That is, a microalloyed steel component to be shaped was maintained at about 800°C until the shaping was completed. After the completion of the shaping, the microalloyed steel component was cooled at a predetermined cooling rate.

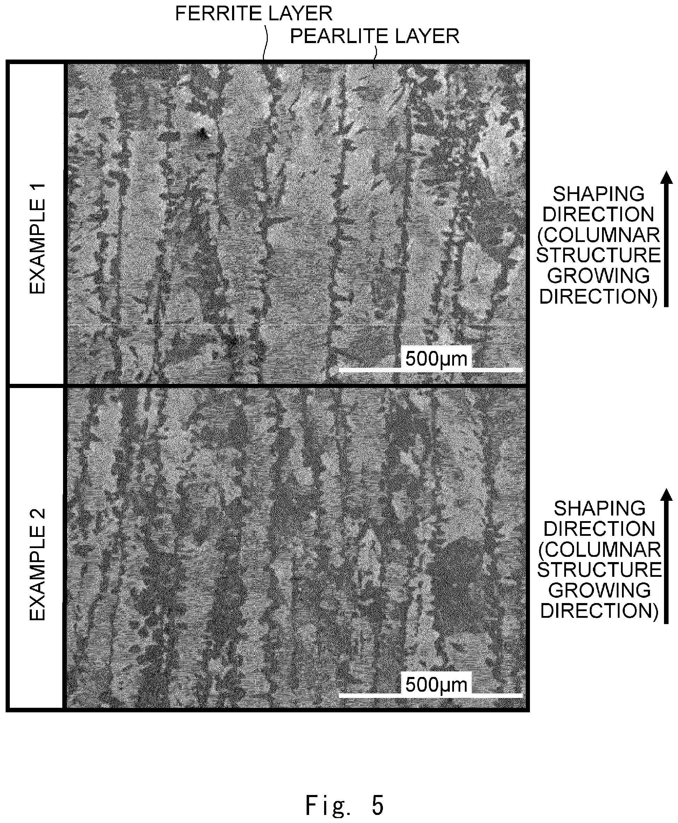

Fig. 5 show photographs of microstructures of microalloyed steel components according to examples. Fig. 5 shows Examples 1 and 2 including pearlite layers having different widths for a comparative therebetween. In the Example 1, a sample had a prism shape having a cross section of 25 mm square. Further, an electric current of the electron beam was 20 mA and a scanning speed was 2,500 mm/s. In the Example 2, a sample had a prism shape having a cross section of 10 mm square. Further, an electric current of the electron beam was 15 mA and a scanning speed was 2,500 mm/s.

As shown in Fig. 5, in the microalloyed steel component according to the Example 1, a fine columnar structure composed of band-shaped pearlite layers extending in the shaping direction and having a width of 100 to 200 µm, and ferrite layers linearly extending in the shaping direction between the pearlite layers was obtained. Similarly, a fine columnar structure was observed in the microalloyed steel component according to the Example 2. In the Example 2, a width of the pearlite layer was 50 to 150 µm. That is, a finer columnar structure was obtained. It is presumed that since the sample shape of the Example 2 was smaller than that of Example 1, the solidification speed of the Example 2 was increased.

A reason why a fine columnar structure is obtained is described hereinafter. In the method for manufacturing a microalloyed steel component according to the first embodiment, the volume of the microalloyed steel powder 30 melted by the electron beam EB is very small. Therefore, it is possible to control a structure of austenite, which is generated during the solidification, so as to have a fine columnar structure composed of crystalline grains extending in the shaping direction. Further, since this austenite is kept at a temperature higher than the austenite transformation completion temperature A3 by the preheating, the fine columnar austenitic structure is maintained until the completion of the shaping. In the cooling process after the completion of the shaping, ferrite is precipitated linearly along the original austenite grain boundaries. Further, pearlite is precipitated into the original austenite grains so as to fill the gaps of the precipitated ferrite. As a result, a fine columnar structure in which belt-shaped pearlite having a width of 200 µm or shorter, precipitated in the original austenite grains and ferrite lineally precipitated in the original austenite grain boundaries are alternately aligned (i.e., alternately arranged) is obtained.

### <Mechanical Property Test>

In order to examine the effect of the direction in which the fine columnar structure extends on mechanical properties, three types of samples A, B and C in which directions in which columnar structures extend with respect to the longitudinal direction (the stress load direction) are different from each other were manufactured. Further, tensile tests and fatigue tests were carried out for them. Each of all the samples A, B and C had a prism shape having a cross section of 10 mm square. Further, an electric current of the electron beam was 16 mA and a scanning speed was 2,800 mm/s. The other conditions are similar to those of the structure observation test.

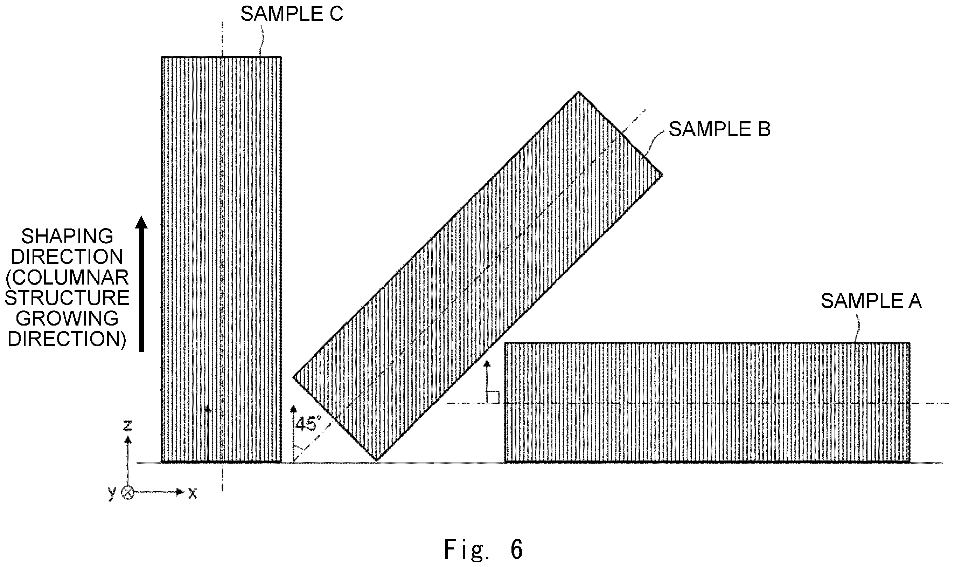

Fig. 6 is a schematic cross section showing relations between shaping directions (columnar structure growling directions) of the samples A, B and C, and longitudinal directions thereof. As shown in Fig. 6, the shaping direction of the sample A was perpendicular to the longitudinal direction thereof. The shaping direction of the sample B was inclined from the longitudinal direction thereof by 45°. The shaping direction of the sample C coincided with the longitudinal direction thereof.

Further, for a comparison purpose, a sample was manufactured by using a laser shaping (SLM: Selective Laser Melting) apparatus. (This sample is referred to as an SLM sample hereinafter). The SLM sample had a martensitic structure.

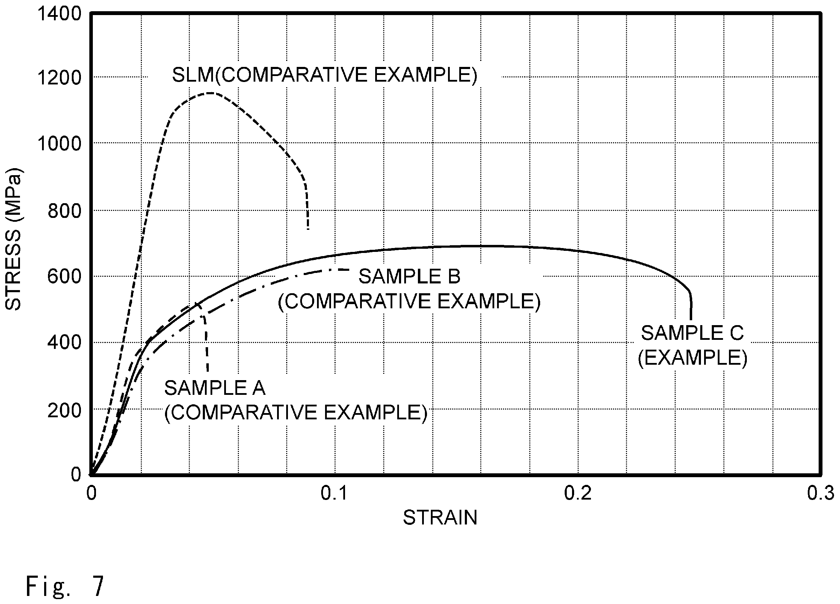

Fig. 7 is a graph showing stress-strain curves in tensile tests of the samples A, B and C, and the SLM sample for comparisons thereof. A horizontal axis represents strains and a vertical axis represents stresses. Further, Table 1 collectively shows tensile strengths and breaking elongations (i.e., elongations at breaking) of those samples.

**[Table 1]**

| | Sample A | Sample B | Sample C | Sample SLM |
|---|---|---|---|---|
| Tensile strength (MPa) | 521.8 | 625.5 | 691.2 | 1155.5 |
| Breaking elongation (%) | 4.7 | 10.6 | 24.6 | 8.9 |

As shown in Fig. 7 and Table 1, since the SLM sample had the martensitic structure, it had a tensile strength larger than 1,100 MPa. However, its breaking elongation was so small that its tenacity was poor.

As shown in Fig. 7 and Table 1, it was observed that mechanical properties of the samples A, B and C, which were manufactured by using the electron beam shaping apparatus, had significant dependences on the shaping directions (the columnar structure growing directions). Specifically, both the tensile strength and the breaking elongation were improved as the shaping direction was brought closer to the longitudinal direction of the shaped object, i.e., the microalloyed steel component. As described above, the sample C according to the example of the first embodiment exhibited excellent mechanical properties including a tensile strength of nearly 700 MPa and a breaking elongation exceeding 20%. The other samples B and C and the sample SLM are comparative examples of the first embodiment.

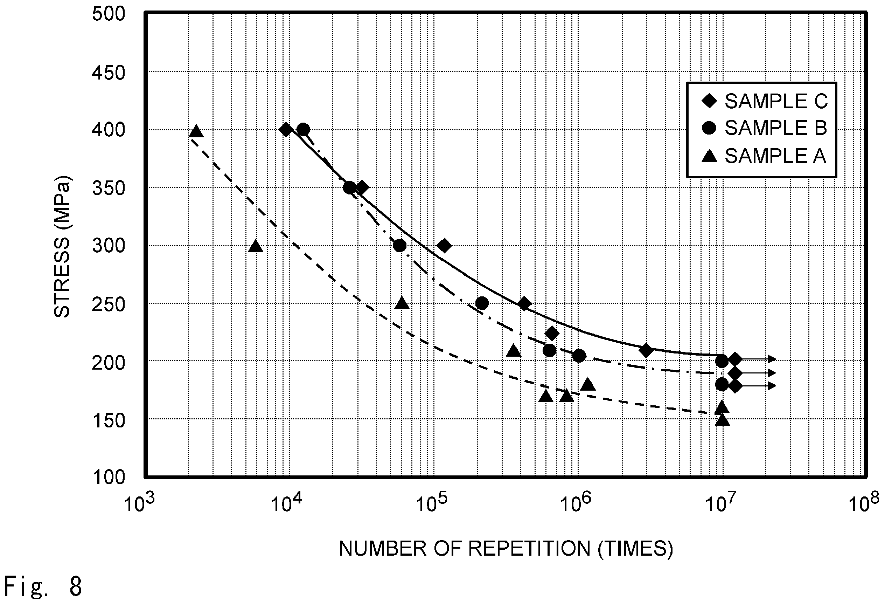

Fig. 8 is a graph showing fatigue characteristics (S-N curves) of the samples A, B and C for comparisons thereof. A horizontal axis represents numbers of repetitions before the component was broken (i.e., raptured) and a vertical axis represents stresses. Arrows shown in the figure indicate that they were not broken. As shown in Fig. 8, the sample C according to the example of the first embodiment exhibited the best fatigue characteristic.

As described above, in the sample C according to the example of the first embodiment, a fine columnar structure composed of band-shaped pearlite layers and ferrite layers precipitated between the pearlite layers extends in the longitudinal direction. Therefore, its mechanical properties such as a tensile strength, an elongation, and a fatigue characteristic are superior to those of the other samples.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A microalloyed steel component (40) comprising a structure composed of ferrite and pearlite, the microalloyed steel component comprising a columnar structure comprising:
band-shaped pearlite layers extending in a longitudinal direction of the microalloyed steel component and having a width of 200 µm or shorter; and
a ferrite layer precipitated so as to extend in the longitudinal direction between the pearlite layers.

2. The microalloyed steel component (40) according to Claim 1, wherein the microalloyed steel component is topologically optimized.

3. A microalloyed steel component manufacturing method for shaping a microalloyed steel component (40) having a three-dimensional (3D) shape, comprising:
spreading a microalloyed steel powder (30) in a layered state;
preheating the microalloyed steel powder (30) spread in the layered state by applying an electron beam (EB) to the microalloyed steel powder (30); and
forming a metal layer by applying an electron beam (EB) to a predetermined area of the preheated microalloyed steel powder (30), and thereby melting and solidifying the microalloyed steel powder (30) in the predetermined area; and
repeating the spreading, the preheating, and the forming, and thereby successively laminating metal layers, wherein
a shaping direction is in parallel with a longitudinal direction of the microalloyed steel component, and the microalloyed steel powder (30) is heated to a temperature higher than an austenite transformation completion temperature A3 in the preheating, and
after the shaping of the microalloyed steel component (40) is completed, the microalloyed steel component (40) is cooled from the temperature higher than the austenite transformation completion temperature A3 at a predetermined cooling rate.

4. The microalloyed steel component manufacturing method according to Claim 3, wherein the microalloyed steel component is topologically optimized.
